Europäisches Patentamt

European Patent Office

Office européen des brevets

(19)

(11) Publication number:  **0 098 727**
**A2**

(12)                    **EUROPEAN PATENT APPLICATION**

(21) Application number: **83303713.8**

(22) Date of filing: **28.06.83**

(51) Int. Cl.³: **G 11 B 5/09**
// G11B5/52, H04N5/782

(30) Priority: **02.07.82 US 394493**
**02.06.83 US 498753**
**02.06.83 US 498752**

(43) Date of publication of application: **18.01.84**
**Bulletin 84/3**

(84) Designated Contracting States: **AT BE DE FR GB IT NL**

(71) Applicant: **DOLBY LABORATORIES LICENSING CORPORATION, 731 Sansome Street, San Francisco California 94111 (US)**

(72) Inventor: **Todd, Craig C., Star Route Box 458, Muir Beach California 94965 (US)**
Inventor: **Gundry, Kenneth J., 1236 Washington Street, San Francisco California 94108 (US)**

(74) Representative: **Pears, David Ashley et al, REDDIE & GROSE 16 Theobalds Road, London WC1X 8PL (GB)**

(54)  **Improvements in helical scan recording and playback systems.**

(57)  A helical scan magnetic recording and reproducing system is of the type where time compressed audio signals are recorded in extensions of the video tracks. In order to avoid a time delay of the reproduced audio relative to its original relationship to the video, additional audio playback heads (S1, S2) are located on the helical scanner so as to read the audio information sufficiently in advance of the video heads (P1, P2) to allow restoration of the original audio/video synchronism. The audio is recovered by a switch (26), de-interleaving circuit (28) and time expansion circuits (30, 32). The arrangement allows full flexibility in audio editing even when the recorded audio signals are digitally encoded and interleaved. In order to avoid a time delay of the reproduced audio relative to the video when played back, additional audio recording heads are located on the helical scanner so as to record the audio information on tracks that when played back are reproduced sufficiently in advance of the video to allow restoration of the original audio/video synchronism. The arrangement can thus can be employed to produce prerecorded tapes having time advanced audio such that synchronous audio/video is reproduced on conventional playback reproducing systems.

IMPROVEMENTS IN HELICAL SCAN RECORDING
AND PLAYBACK SYSTEMS

The present invention is concerned in general with helical scan magnetic tape recording and reproducing systems, particularly with those in which signals are recorded on a magnetic medium by a plurality of rotating magnetic heads along a series of sequential discontinuous tracks. Information of one type (such as the video portion of a television signal) is recorded and later reproduced continuously, but information of another type (such as the corresponding audio portion of the television signal) is compressed along the time axis and recorded non-simultaneously. Before the two types of information are recorded and reproduced, they have a certain time relationship between them. After being recorded and reproduced, one type of information (the audio portion, for example) is time delayed with respect

to such time relationship. Although the invention is directed principally to overcoming certain problems in the recording and playback of time compressed audio signals in the extension of video tracks in a helical scan television recording and playback system, the principles of the invention are applicable to the recording and playback of other dissimilar signal types in which the synchronization of the signal types is of importance.

## Description of the Prior Art

So called "helical scan" magnetic recording and playback systems for use with television and other high bandwidth signals are well known in the art. Helical scan - systems for television are widely used both professionally and by consumers. Magnetic tape is transported around a rotating drum or scanner which carries record/playback heads such that a series of parallel obliquely angled tracks are recorded in succession along the length of the tape. These helical scan tracks carry the television picture information.

The accompanying sound or audio information in most systems is recorded by a stationary head and carried in a longitudinal track typically outside the helical scan tracks. Because of the drawbacks resulting from narrow audio track width and the slow longitudinal tape speed, particularly in consumer systems, other techniques for recording the sound information have been developed. One alternative approach is to modulate a subcarrier with the sound information and to record the resulting spectrum along with the modulated television information spectrum in the helical scan tracks. A disadvantage of this approach is that the audio information is not separable from the video information prior to demodulation and thus the audio cannot be easily handled by itself as is desirable in editing or re-recording with added audio information.

Another approach to the recording of sound signals in a helical scan television recording and playback system is set forth in US-PS 4,303,950; US-PS 4,353,098 and the article "A New 8-Bit PCM Audio Recording Technique Using an Extension of the Video Track" by N. Nakano et al, IEEE Transactions on Consumer Electronics, Vol. CE-28, No. 3, August 1982 (manuscript received June 6, 1982), pp. 241-248. Each of these references proposes compressing the audio along the time axis and recording it in an extension of the helical scan video track. The video information fills 180 degrees of each track such that with two heads the video recording and playback is continuous, whereas the time compressed audio is recorded and reproduced in discontinuous segments that are non-simultaneous and time delayed with respect to the corresponding video information. According to the Nakano et al proposal the time-compressed audio is in digital form (pulse code modulation) and the two audio channels are interleaved so as to reduce susceptibility to burst errors resulting from tape drop outs, for example.

Problems of burst errors in digital transmission systems and the use of interleaving to reduce the effects of burst errors along with error detection and correction in general are well known in the art. See for example "Error Detection and Correction in Audio Media" by Charles H. Learoyd in the Boston Audio Society's publication Speaker, 1982, pages 35-47; PCM and Digital Transmission Systems by Frank F. E. Owen, McGraw-Hill, San Francisco, 1982; An Introduction to Error-Correcting Codes by Shu Lin, Prentice-Hall, New Jersey, 1970; and Error-Correction Coding for Digital Communications by George C. Clark, Jr. and J. Bibb Cain, Plenum Press, New York, 1981. US-PS 4,238,852 and US-PS 4,281,355 relate

- 4 -

to recording PCM audio signals in a video format and discuss extensively the use of interleaving techniques.

In helical scan magnetic tape recording systems of the type disclosed in the above cited references, in which the video information is recorded and reproduced continuously but the audio information is compressed along the time axis and recorded in segments non-simultaneously with the video information with which it was originally associated, there are some specific problems limiting the utility and ease of application of such a system.

The time compression of the audio signals and their non-simultaneous recording (with respect to the video signals) causes a distinct time delay on playback between the video portion of the signal and its corresponding audio portion. This time delay may be tolerated, if it does not exceed approximately 50 milliseconds. The system of US-PS 4,303,950, for example, is described as having the audio signal lag the video signal by approximately 16 milliseconds. With respect to the original recording (e. g., the first generation) in such systems where both audio and video information arrived at the input to the recorder simultaneously (such as with a television signal input in which the audio is in synchronism with the video), this may be the case. If, however, an attempt is made to copy this recording on another recorder of the same type, then the time delay of the two tape generations will add.

Frequently, when a combined video/audio recording is made, there is a need to edit, or add further audio information at some later time. In certain embodiments described in US-PS 4,303,950, the audio information for each channel is recorded separately in predetermined segments of the video track (e.g., the audio information for the multiple channels is not interleaved); in this case one channel can be replaced without affecting the other. However, this approach further increases the delay or lag if it is necessary to playback and re-record the original audio information after performing an operation on it (such as "play channel one, mix more signals to it and re-record on channel two").

If the audio information for multiple channels is interleaved, then it is not possible to replace the audio for one channel, as can be done, for example, in some of the embodiments of US-PS 4,303,950, without replacing all of the interleaved audio information and thus all audio channels.

While interleaving in digital recording systems is useful even when only a single audio channel is recorded, it is particularly desirable for multiple channel recordings in order for the recording to handle the largest possible burst error. For example, in a two channel system, if an error correction method is used which can correct for a loss of 20% in time of the signal due to burst errors, then, if such an error occurs, it is possible· to reconstruct both audio channels if the signals are interleaved because only 20% of each signal channel is lost. However, if the audio channels are not interleaved but instead are split into the two separate portions on the helical scans (such as in US-PS 4,303,950), then a burst error of the same physical size as in the first example will result in the loss of 40% of the signal in one channel, which cannot be reconstructed. Thus, interleaving of multiple audio channels is desirable for purposes of error correction, but undesirable if full audio editing capabilities are wanted.

One solution to the time delay or lag problem is set forth in US-PS 4,353,098 which suggests storing the video information and reading it out in time synchronism with

- 6 -

the delayed audio. This approach has the drawback that means for holding and playing back video signals, such as frame stores, are expensive and would be commercially unacceptable in a consumer product.

It is thus an object of this invention to provide a helical scan recording and playback system, in which video and time compressed audio information can be treated individually in such a way as to provide playback without time delay as well as the capability to re-record in the same position on the tracks at least a portion of played back time compressed audio information, or re-record a single audio channel even though interleaving is employed.

It is a further object of the present invention to provide recording equipment for the production of magnetic tapes in which the time compressed audio is advanced in time with respect to the corresponding video information such that magnetic tapes produced on such equipment can be played on prior art systems with synchronous video/audio. The present invention also contemplates magnetic tapes recorded with such a characteristic.

## Summary of the Invention

In accordance with the teachings of the present invention, both above-mentioned problems are solved and the general utility and applicability of such helical scan recording systems are greatly increased.

According to the present invention, means are provided for playing back those portions of the recorded signal containing the time compressed information in advance of the time that the normal system playback heads scan the time compressed information in order that the relative timing of the time compressed information can be compensated. More particularly, additional playback heads are provided that are carried by the rotating head assembly at positions offset from the normal playback heads. The offset is at least as great as the offset required to restore the original timing of the signals prior to their application to the recording system. Thus, for example, the invention restores the synchronism of the audio and video portions of a television signal and provides full audio editing flexibility including the capability to re-record individual audio channels independently of each other and in the same relative position on the recording medium.

According to further aspects of the present invention, means are provided for recording those portions of the recorded signal containing the time compressed information in track positions such that the normal playback heads scan the time compressed information in advance of the time that the other information is scanned in order that the relative timing of the information can be restored. More particularly, additional record heads are provided that are carried by the rotating head assembly at positions offset from the normal record heads. The offset is at least as great as the offset required to restore the original timing of the signals prior to their application to the recording system when played on a prior art playback system that does not incorporate the teachings of this invention. Thus, for example, the invention restores the synchronism of the audio and video portions of a television signal.

### Brief Description of the Drawings

Figure 1 is a block diagram of a prior art helical scan television recording system employing two heads in which audio information is recorded along with video information in separate portions of each helical scan track.

Figure 2 is a block diagram of a helical scan television playback system according to the prior art.

Figure 3 is a block diagram of a helical scan television playback system according to the present invention.

Figures 4A and 4B show a record and playback timing diagram and the associated time delays for a helical scan recording system of the type shown in Figure 1 using two record/playback heads.

Figure 5 shows a playback and rerecording. timing diagram of the helical scan television playback system according to the present invention.

Figure 6A shows a top view of the rotating head drum with the respective locations of primary and secondary heads, and Figure 6B the track configuration on the magnetic tape for the system according to the present invention.

Figure 7 is a block diagram of a helical scan television recording system according to the present invention.

Figure 8 is a representation of the track configuration on the magnetic tape recorded using the recording system of the present invention.

### Detailed Description of the Invention

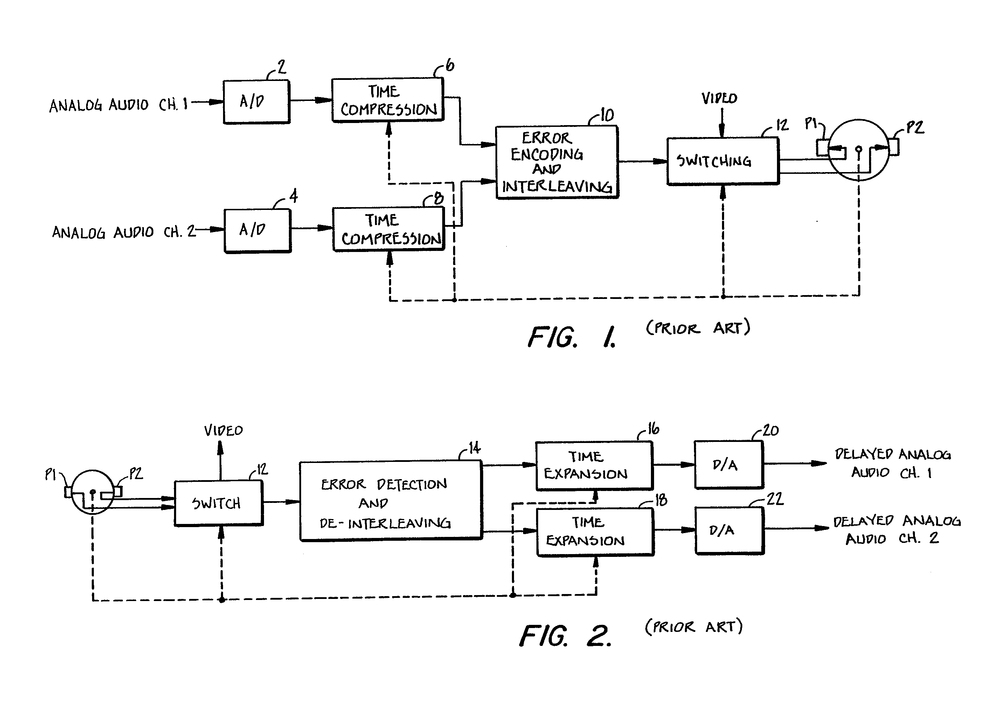

Referring now to the drawings, Figure 1 shows a simplified block diagram of a prior art helical scan television recording system of the type described in which the audio information is compressed along the time axis and recorded in non-continuous segments in extended portions of the helical scan tracks. Systems of this type are described in said US-PS 4,303,950; 4,353,098 and article by K. Nakano et al. Analog audio channel 1 and channel 2 are applied to respective analog-to-digital converters 2 and 4 which in turn apply the digitized audio signals to time compression means 6 and 8 that each include buffer memories and means for reading the data in and out at the appropriate times. The time compressed signals are applied to error encoding means 10 that includes means for interleaving the two digitized channels. The processed digital audio information from block 10 is applied along with the video information to be recorded to switching means 12 that connects the audio and video information to the two helical scanner recording heads P1 and P2 in the desired sequence. The switch can be actuated in the conventional way by a signal derived from the scanner drum rotational position. The time compression means 6 and 8 can also be controlled by a signal derived from the drum position. Details of the prior art system of Figure 1 are well known in the art.

In the prior art system, playback is simply the reverse of recording as is shown in the block diagram of Figure 2. The output from heads P1 and P2 is switched by a signal derived from the drum position. The off-tape digital audio information is applied to error detection and de-interleaving means 14, the two-channel output of which is applied to the time expanding means 16 and 18 which also can be controlled by a signal derived from the drum position. The expanded signals are applied to respective digital-to-analog converters 20 and 22 that provide the two analog audio channels of information, which are delayed with respect to the reproduced video.

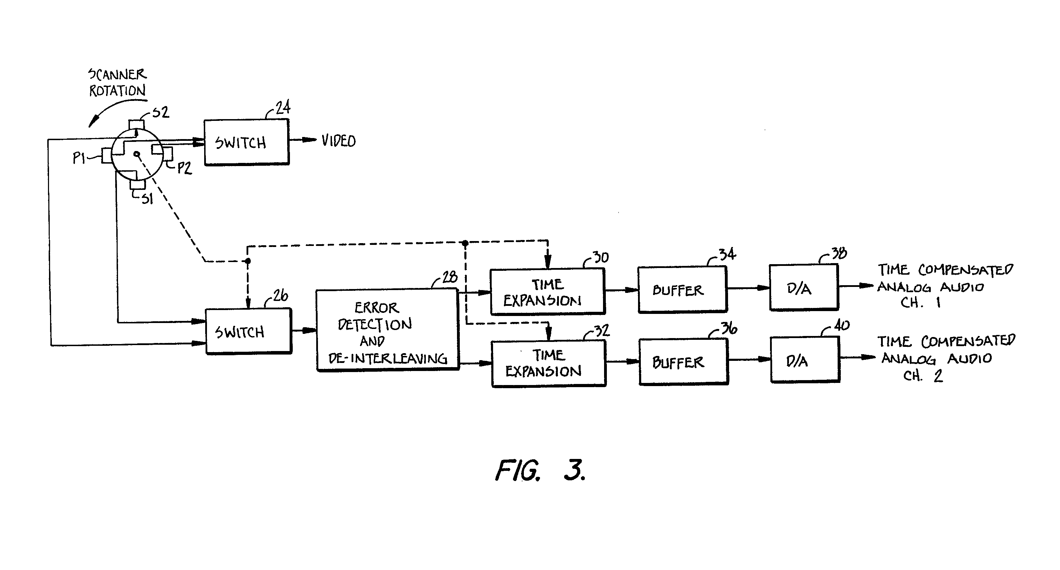

Figure 3 shows the playback system according to the present invention. The heads P1 and P2 are applied to a switching means 24 that operates under the control of a signal derived from the drum position to provide the video signal information as in the prior art. However, the audio information is reproduced by a further set of heads S1 and S2 that are offset from the heads P1 and P2 such that heads S1 and S2 read the audio information off tape sufficiently in advance of the time when the audio information would be read by the P1 and P2 heads that the original relative timing of the audio and video signals (e.g., the relative timing prior to their application to the recording system) can be restored. In other words, the synchronism of the audio and video portions of the television signal can be restored. The signals from heads S1 and S2 are applied to a switching means 26 of the same type as used to switch heads P1 and P2 and the switching is also controlled by a signal derived from the drum position, but such that the heads S1 and S2 read the respective audio portions of the helical tracks. The switching means output is applied to processing circuitry that includes error detection and de-interleaving means 28 and time expansion means 30 and 32. Storage means such as buffer memories 34 and 36 to provide precise adjustment of audio/video synchronism can be located either after blocks 30 and 32 as shown, or alternatively, a single buffer can be located before block 28. Buffering of digital audio information can be accomplished very inexpensively, whereas buffering of video information is very costly. The processed and stored audio information is applied to respective digital-to-analog converters 38 and 40 which provide the two channels of analog audio information.

In Figures 1 through 3, additional processing may be provided in practical embodiments, for example, the audio signals will usually be modulated onto a carrier prior to recording and demodulated after playback. Such details are well known in the art and are omitted here for clarity.

A four head helical scan video tape recording and playback system is described in US-PS 4,358,799. However, the second pair of heads is for the purpose of reducing the head drum diameter and also for use in providing playback monitoring during recording.

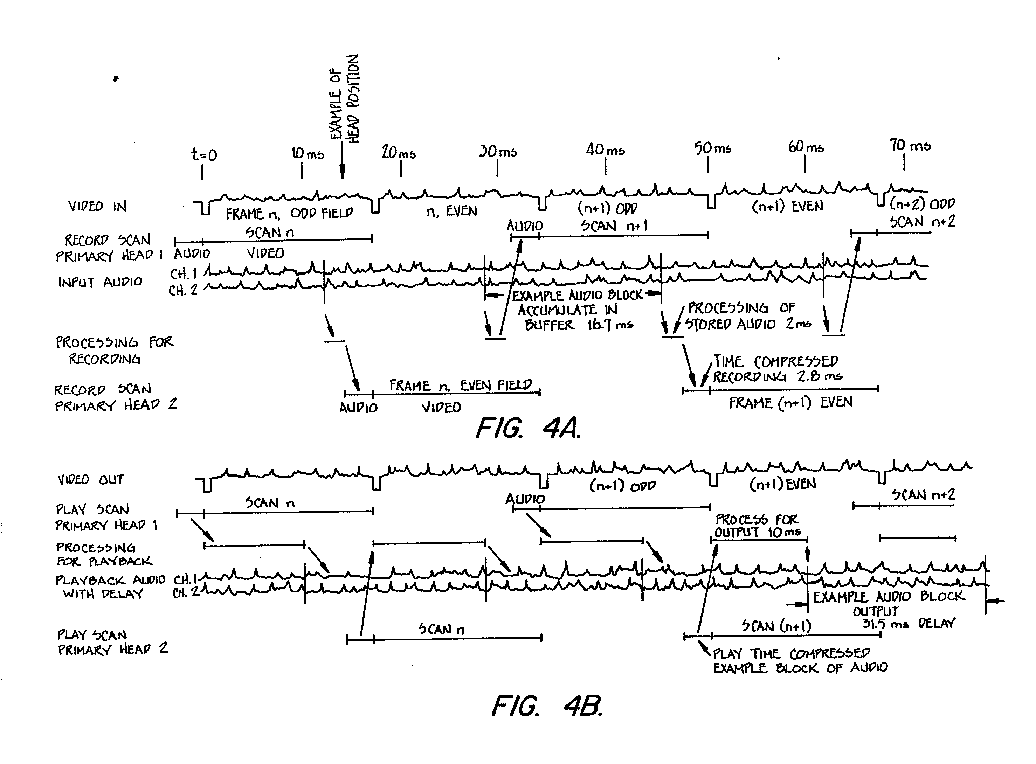

The operation of the invention will be better appreciated by reference to the remaining Figures. Figure 4A shows an example of a timing diagram of a helical scan audio/video recording system of the type shown in Figure 1, where time compressed audio signals are recorded, for example, on a first portion of each track (e.g. the first 30 degrees of rotation of the head assembly), and video information is recorded on a second portion ·of the track (in this example, 180 degrees of rotation). The rotating head system in this embodiment contains two heads (referred herein as primary heads P1 and P2), one recording all even fields and the other recording all odd fields, the two together making up one picture frame. If information begins entering the recorder at time T=0, then, in the example shown, primary head P1 records video scan n, an odd field onto the first track. One head rotation later, it records odd field scan n+1 onto track 3, and another head rotation later, odd field scan n+2 onto track 5, etc. Primary head P2 records the even fields of scan n, n+1, n+2, etc. onto tracks 2, 4 and 6 etc. On each of the scans following the first one, each of the two heads records time compressed audio at the beginning of each track. In order to see the exact time relationships it is best to work backward in time from an assumed audio recording.

If it is assumed that audio is recorded in time compressed form at the beginning of scan n+1 (even) by primary head P2, then this recording is 2.8 milliseconds long in a 60 Hz system with a total scan of 210 degrees. This amount of recorded audio information requires some prior processing time, for example preconditioning for later error correction, which in this example is assumed to take 2 milliseconds. Prior to this time, audio information was accumulated and stored in a buffer for a time period of 16.7 milliseconds (1/60th of a second). These 16.7 milliseconds are highlighted in Figure 4A as the example audio block. If this sample audio block is now followed through to the playback diagram of Figure 4B, it can be seen that playback of the even field scan n+1, of which the example audio block is a part, results in a time delay with respect to the corresponding video information, of 31.5 milliseconds. This total time delay is composed of the basic inherent time delay and the addition of output processing time (for example, error correction and de-interleaving) which is assumed in this example to be 10 milliseconds.

It can easily be seen that this time delay is an inherent part of the system configuration and can be greater or smaller in magnitude than in the example given, depending on the processing chosen for time compression. The time compression can comprise, for example, analog time compression, digital signal processing such as pulse code modulation, or delta modulation, or any other suitable method. It is also clear that the sequence of audio and video information on the track can be reversed without significant changes in these basic relationships. The example time delay of 31.5 milliseconds can probably be tolerated on a single playback pass, but will result in excessive time delay if the information is to be copied onto another recorder of the same type which results in addition of time delays. In addition, it is impossible to re-record any portion of the audio information in synchronism with the original, thus severely limiting editing capabilities.

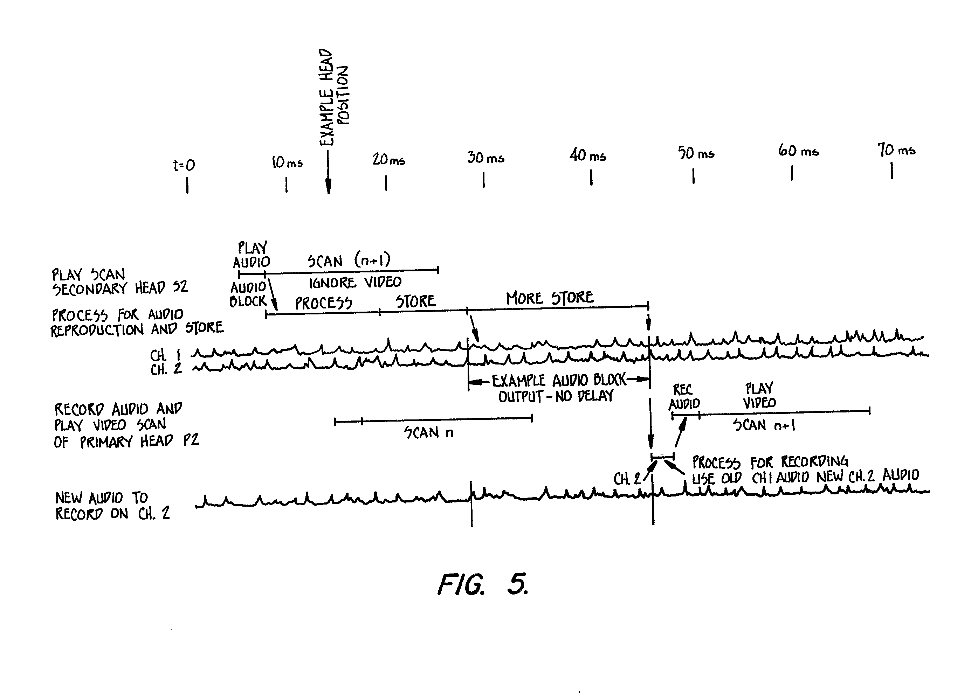

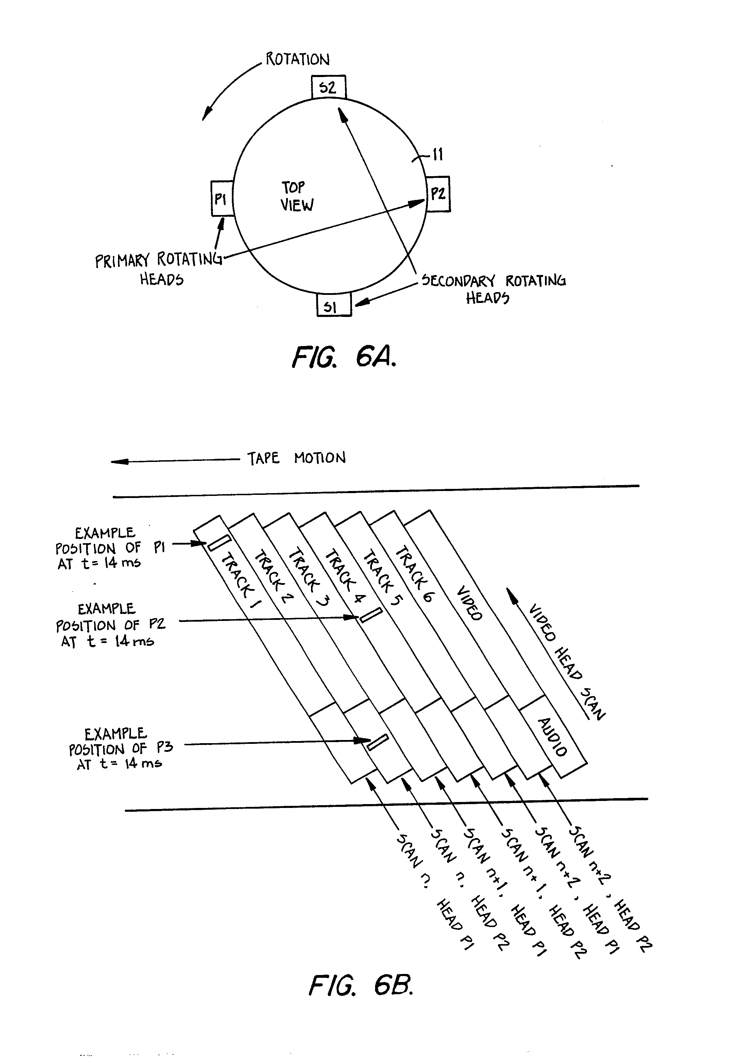

Figure 5 shows the playback and re-record timing relationships with respect to the same example audio block if the playback system of the present invention is used. The recording timing diagram would be identical to Figure 4A and the prior art recording arrangement such as shown in Figure 1 is employed for recording and re-recording in connection with the present invention. A plan view of an embodiment of the head configuration of the present invention is shown in Figure 6A, which will is described below.

In Figure 5 the scan n+1 (containing the example audio block) is played first by secondary head S2 which retrieves only the time compressed audio information and ignores the video information. Due to the physical location of secondary head S2 on the head drum, this audio information is retrieved at a time preceding the retrieval of the video information on the same track by primary head P2. There is thus sufficient time available to compensate the delay in the relative timing of the audio information including completion of the output processing of the audio information so that it can be replayed in synchronism with the video information which was originally applied to the recorder at the same time. Furthermore, since a recording of this example audio block need not take place until some time in the future (just prior to the video playback of scan n+1 by primary head P2), it is possible to re-record any portion of the time compressed audio signal through the primary head P2 such that on subsequent playback it will again be reproduced in synchronism with its corresponding video information.

The secondary heads S1 and S2 are offset from the primary heads P1 and P2 angularly, as indicated in Figure 6A, and also in vertical height on the scanner drum as is apparent from inspection of Figures 5 and 6B. In practice the offset is not critical: the offset need only be great enough to provide at least the required time advance relative to heads P1 and P2. The buffer storage then can be adjusted to provide the desired synchronism.

The location of the secondary heads at a different vertical height than the primary heads (e.g., the secondary heads lying in a plane offset with respect to the plane of in which the primary heads lie, the planes being perpendicular to the axis of the helical scanner) may result in the secondary heads scanning less than the entire full length of each track. However, if the secondary heads are offset in the direction such that any loss of track scan is at the end distal from the time compressed audio segment this causes no problem. Suitable design of the scanning geometry would allow the heads in both planes to scan the entire track length.

Figure 6B shows the pattern of tracks as they are recorded onto the magnetic tape. The example head positions of Figure 6B shown on the track diagram correspond, in time, to the arrow marked "example head position" in Figure 4A and Figure 5, i.e. 14 milliseconds after t=0. From the track configuration diagram it is also evident that a sequential splitting of individual audio channels (rather than interleaving) will be adversely affected by burst errors, which are more likely to occur at the beginning of a track.

The exact head position for the secondary heads has, in the preferred embodiment, been chosen such that secondary head S2 will read ("preview") signals which have been recorded by primary head P2 and secondary head S1 will preview signals recorded by primary head P1. The secondary heads are switched so that during playback they read only one type of the dissimilar signal (audio in the example) and the other type of dissimilar signal (video in the example) is read by the primary heads.

As stated above, the offset of the secondary heads with respect to the primary heads is not critical. Another possible arrangement is to provide dual gap heads at the primary head angular positions, such that the secondary heads are vertically offset by one or, preferably two, tracks. A two track offset is preferred because the the fabrication of a head with only a one track spacing would be more costly and because a one track advance would not provide the sufficient time advance likely to be required. Thus in the case of dual gap heads offset by two tracks, a two field advance could be obtained instead of the one and a half field advance as shown in Figures 6A and 6B.

In accordance with further teachings of the present invention magnetic tapes can be recorded with time advanced audio segments such that such tapes can be played with synchronous audio and video on prior art recorder/reproducers of the type described in connection with Figures 1 and 2. Thus pre-recorded videotapes could be produced which would be playable without delayed audio on the prior art two-head playback machines. In order to accomplish this a similar electro-mechanical arrangement is employed as has been described in connection with the playback aspects of the present invention. However, the functions of the primary and secondary heads are reversed, such that the audio portion of a television signal to be recorded is applied to the primary heads and the corresponding video portion is applied to the secondary heads. If the record and playback delay timings are the same as described, then the secondary to primary head offset is the same as for the playback embodiments of the present invention. While pre-recorded tapes could be produced with time advanced audio by other means, such as the use of a video store to delay the video, the use of the secondary heads to advance the audio timing with respect to the video on the tape is substantially less expensive.

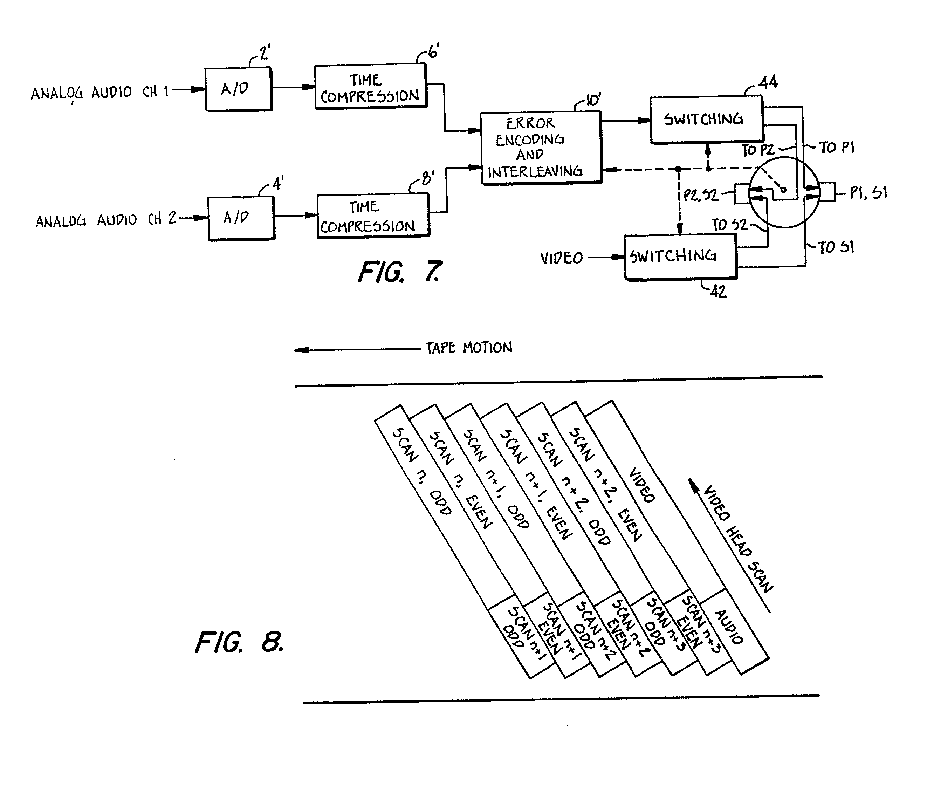

Figure 7 shows a simplified block diagram of the recording system according to the present invention. Blocks functioning the same as those in the prior art system of Figure 1 use the same reference numerals with a prime mark ('). As in Figures 1 through 3, additional processing may be provided in practical embodiments, for example, the audio signals will usually be modulated onto a carrier prior to recording and demodulated after playback. Such details are well known in the art and are omitted here for clarity.

Unlike the prior art system of Figure 1, the recording system of the embodiment of Figure 7 includes a scanner having four heads. Although the scanner could have an angular head position configuration such as shown in Figure 6A, the configuration is shown as discussed above with dual gap heads located 180 degrees apart, the pairs of heads S1/S2 and P1/P2 being in vertically separated planes with respect to the scanner axis of rotation. The video information is applied to a switching means 42 that applies that information to the S1 and S2 heads. The time compressed audio information from block 10' is applied to a switching means 44 that applies that information to the P1 and P2 heads. The vertical offset between the S and P head pairs is two tracks such that time compressed audio is recorded two tracks spaced apart from the video information that is simultaneously recorded. The head offset is such that when the magnetic tape is played back the time compressed audio is advanced in time with respect to the video information by virtue of being recorded in a track that is reproduced earlier than the track in which the video was simultaneously recorded.

Figure 8 depicts the track pattern of a magnetic tape recorded with an arrangement such as the embodiment of Figure 7. The time compressed audio information is recorded in a first segment along each consecutive track. Video information is recorded in the following segment. The time compressed audio in each track is recorded two tracks or scans earlier than the video in the same track. For example, the left hand track carries audio from scan n+1, odd and the video from scan n, odd. Thus when any track is played back the audio information is advanced in time with respect to the relative timing of the audio and video information that was simultaneously applied to the recording heads. The switching means 42 and 44 under control of a signal derived from the scanner rotational position switch the audio and video signals as necessary to achieve the desired pattern and as explained above, a signal derived from the scanner position also causes the time compressed audio to be read out at the appropriate times.

It is anticipated that tapes recorded with time advanced audio will contain some information (such as an identification bit) to signify the fact so that playback machines capable of correcting the normal time delay can change modes and still reproduce the time advanced recording properly. Otherwise the playback machines which can correct for the normal time delay would reproduce the advanced audio recorded tapes with the audio advanced approximately 30 MS with respect to the video.

It will be appreciated that the invention is not limited to the specific track layout as shown in Figure 8 in which there is an audio segment followed by a video segment. For example, the audio information can be recorded in two segments at the beginning and end of each track.

Optionally, buffer memories can be included in the embodiment of Figure 7, either by locating one such memory after block 10' or one in each line from blocks 6' and 8'. By providing more than the required time advance with the pairs of heads P and S, exact synchronism in playback on machines having known delay characteristics can be provided by the delay in the buffer memories.

Claims

1. A helical scan playback system for playing a magnetic medium on which a plurality of rotating magnetic heads has recorded signals in a series of sequential discontinuous tracks, the signals including at least one signal compressed along the time axis, comprising

means including a rotating assembly carrying a plurality of playback heads scanning said tracks for playing back signals, said means playing back said at least one time compressed signal from tracks spaced apart from tracks from which said other signal or signals is or are played back such that said at least one time compressed signal is advanced in time with respect to said other signal or signals by virtue of being reproduced earlier than the track in which said other signal or signals were simultaneously recorded, and

signal processing means receiving said signals, said means including means for expanding said at least one time compressed signal.

2. A helical scan playback system according to claim 1 wherein said plurality of playback heads includes first and second pairs of playback heads, the pairs of playback heads carried by said rotating assembly offset with respect to each other such that one pair of heads reads at least portions of tracks earlier in time than when the other pair of heads reads at least portions of the same tracks.

3. A helical scan playback system according to claim 2 wherein the system is also for recording and one pair of said playback heads are the same as said magnetic heads used for recording said signal.

4. A helical scan record and playback system according to claim 3 further comprising means for re-recording in the same position on the tracks at least a portion of said at least one time compressed signal played back by the pair of heads reading earlier in time.

5. A helical scan playback system according to claim 2 wherein the offset of said pairs of playback heads is at least substantially equal to the offset required to restore the relative timing of the signals prior to their application to the recording system.

6. A helical scan playback system according to claim 2 wherein said signals are the audio and video portions of a television signal and the audio portion is the signal compressed along the time axis.

7. A helical scan playback system according to claim 6 wherein the offset of said pairs of playback heads is at least substantially equal to the offset required to restore the synchronism of the audio and video portions of the television signal.

8. A method of playing a magnetic medium on which a plurality of rotating magnetic heads has recorded signals in a series of sequential discontinuous tracks, the signals including at least one signal compressed along the time axis, comprising

playing back said at least one time compressed signal from tracks spaced apart from tracks from which said other signal or signals is or are played back such that said at least one time compressed signal is advanced in time with respect to said other signal or signals by virtue of being reproduced earlier than the track in which said other signal or signals were simultaneously recorded, and

processing said signals, including expanding said at least one time compressed signal.

9. A playback method according to claim 8 wherein said time advance is at least substantially equal to the time advance required to restore the relative timing of the signals prior to their application to the recording system.

10. A playback method according to claim 9 wherein said signals are the audio and video portions of a television signal and the audio portion is the signal compressed along the time axis.

11. A playback method according to claim 10 wherein said time advance is at least substantially equal to the time advance required to restore the synchronism of the audio and video portions of the television signal.

12. A helical scan recording system for recording a plurality of signals on a magnetic medium in a series of sequential discontinuous tracks, comprising

signal processing means receiving said signals, said means including means for compressing at least one of said signals along the time axis, and

recording means receiving the signals from said signal processing means including said at least one time compressed signal, said recording means including a rotating assembly carrying a plurality of recording heads scanning said tracks for recording signals along said tracks, said means recording said at least one time compressed signal on tracks spaced apart from tracks on which said other signal or signals is or are simultaneously recorded such that when the magnetic medium is played back said at least one time compressed signal is advanced in time with respect to said other signal or signals received by the recording means by virtue of being recorded in a track that is played back earlier than the track in which said other signal or signals were simultaneously recorded.

13. A helical scan recording system according to claim 12 wherein said plurality of recording heads includes first and second pairs of recording heads, the pairs of recording heads carried by said rotating assembly offset with respect to each other such that one pair of heads records at least portions of tracks earlier in time than when the other pair of heads records at least portions of the same tracks.

14. A helical scan playback system according to claim 13 wherein the offset of said pairs of recording heads is at least substantially equal to the offset required to restore the relative timing of the signals when played back.

15. A helical scan playback system according to claim 13 wherein said signals are the audio and video portions of a television signal and the audio portion is the signal compressed along the time axis.

16. A helical scan playback system according to claim 15 wherein the offset of said pairs of recording heads is at least substantially equal to the offset required to restore the synchronism of the audio and video portions of the television signal.

17. A method of recording signals in a series of sequential discontinuous tracks on a magnetic medium using a plurality of rotating magnetic heads, the signals including at least one signal compressed along the time axis, comprising

recording said at least one time compressed signal on tracks spaced apart from tracks from which said other signal or signals is or are recorded such that said at least one time compressed signal is advanced in time with respect to said other signal or signals by virtue of being reproduced earlier than the track in which said other signal or signals were simultaneously recorded, and

processing said signals, including expanding said at least one time compressed signal.

18. A recording method according to claim 17 wherein said time advance is at least substantially equal to the time advance required to restore the relative timing of the signals prior to their application to the recording system.

19. A recording method according to claim 18 wherein said signals are the audio and video portions of a television signal and the audio portion is the signal compressed along the time axis.

20. A recording method according to claim 19 wherein said time advance is at least substantially equal to the time advance required to restore the synchronism of the audio and video portions of the television signal.

21. A recorded video tape having a plurality of adjacent tracks which bear video information and time compressed audio information, the time compressed audio information in each track being advanced in time with respect to the video information.

FIG. 1. (PRIOR ART)

FIG. 2. (PRIOR ART)

1/6

0098727

FIG. 3.

FIG. 4A.

FIG. 4B.

FIG. 5.

FIG. 6A.

FIG. 6B.

FIG. 7.

FIG. 8.

0098727